# EUROPEAN PATENT APPLICATION

(11) **EP 4 382 877 A1**
(43) Date of publication of application: **12.06.2024**
(21) Application number: 22211780.6
(22) Date of filing: 06.12.2022
(51) Int. Cl.: G01L 17/00, G01M 3/24, G01M 17/02

(54) **AUTOMATED IDENTIFICATION OF VEHICLE VARIANTS FOR MAINTENANCE OPERATIONS**

(71) Applicant: VOLVO TRUCK CORPORATION, 405 08 Göteborg (SE)
(72) Inventor: SHETTY, Abhishek Narayana, 421 44 Västra Frölunda (SE); HÖGLIND, Andreas, 417 62 Göteborg (SE)
(74) Representative: Valea AB

(57) **Abstract**

A computer-implemented method includes receiving, by a processor device of a computer system, vehicle identifier data indicative of a vehicle. The method further includes obtaining, by the processor device, a vehicle configuration of the vehicle based on the vehicle identifier data, the vehicle configuration including at least one potential leak location. The method further includes moving, by the processor device, a first sensor device to the at least one potential leak location with respect to the vehicle. The method further includes receiving, by the processor device, a measurement from the first sensor device.

## Description

### TECHNICAL FIELD

The disclosure relates generally to vehicle maintenance operations. In particular aspects, the disclosure relates to automated identification of vehicle variants for maintenance operations. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Maintenance and repair of vehicles may be performed manually and/or using automated processes. One challenge with automation is instructing a robot or other device to perform operations at a correct location on a vehicle. This problem is further complicated by the proliferation of different models and configurations of vehicles, which may have unique arrangements of different components and systems.

### SUMMARY

According to a first aspect of the disclosure, a computer-implemented method may include receiving, by a processor device of a computer system, vehicle identifier data indicative of a vehicle. The method may further include obtaining, by the processor device, a vehicle configuration of the vehicle based on the vehicle identifier data, the vehicle configuration including at least one potential leak location. The method may further include moving, by the processor device, a first sensor device to the at least one potential leak location with respect to the vehicle. The method may further include receiving, by the processor device, a measurement from the first sensor device. A technical benefit may include automating a leak detection process.

In some examples, receiving the vehicle identifier data may further include receiving an image from a camera, the image including a vehicle identifier comprising a text string. Obtaining the vehicle configuration may further include identifying the text string based on the image, and retrieving the vehicle configuration from a vehicle configuration database of predetermined vehicle configurations based on the identified text string. The first sensor device may include an ultrasonic sensor device. The measurement from the first sensor device may include an ultrasonic sensor measurement indicative of an air leak. The method may further include receiving, by the processor device, a measurement from a second sensor device indicative of a location of the vehicle relative to a predetermined ground location, wherein moving the first sensor device at the at least one potential leak location with respect to the vehicle is based in part on the measurement from the second sensor device. The second sensor device may include a pressure sensor device. A technical benefit may include automating a leak detection process.

In some examples, receiving the vehicle identifier data may further include receiving an image from a camera, the image including the vehicle identifier. A technical benefit may include identifying a vehicle using pre-existing vehicle markings.

In some examples, the at least one potential leak location may be at least one location in a pneumatic system of the vehicle. A technical benefit may include detecting an air leak in a pneumatic system.

In some examples, the at least one potential leak location may be at least one location in a hydraulic system of the vehicle. A technical benefit may include detecting a fluid leak in a hydraulic system.

In some examples, the at least one potential leak location may include a plurality of potential leak locations with respect to the vehicle. A technical benefit may include inspecting several locations of a system during a single inspection process.

In some examples, the method may further include receiving, by the processor device, a measurement from a second sensor device indicative of a location of the vehicle relative to a predetermined ground location, wherein the command to automatically position the first sensor device at the at least one potential leak location with respect to the vehicle is based in part on the measurement from the second sensor device. A technical benefit may include more accurately determining the relative positions of vehicle components.

In some examples, the method may further include determining, by the processor device, the location of the vehicle relative to the predetermined ground location based on the measurement from the second sensor device. The method may further include determining, by the processor device, the at least one potential leak location with respect to the predetermined ground location based on the vehicle configuration and the location of the vehicle relative to the predetermined ground location. Moving the first sensor device to the at least one potential leak location with respect to the vehicle may be based on the at least one potential leak location with respect to the predetermined ground location. A technical benefit may include more accurately determining the relative positions of vehicle components.

In some examples, the vehicle identifier data may include Radio-Frequency Identification data received from an RFID tag on the vehicle, and identifying the vehicle configuration may be based on the RFID data. A technical benefit may include more accurately determining the relative positions of vehicle components. A technical benefit may include identifying a vehicle using wireless components.

In some examples, the first sensor device may include an ultrasonic sensor device. A technical benefit may include accurately detecting leaks using ultrasonic waves.

In some examples, moving the first sensor device to the at least one potential leak location with respect to the vehicle may include operating a robot arm comprising the first sensor device to move the first sensor device to the at least one potential leak location. A technical benefit may include automating a leak detection process.

In some examples, the command to operate the robot arm to position the first sensor device at the at least one potential leak location may be further based on a relative location of a wheel of the vehicle relative to a base portion of the robot arm, and a relative location of the at least one potential leak location with respect to the relative location of the wheel of the vehicle. A technical benefit may include more accurately determining relative locations of vehicle components.

In some examples, a computer system may be configured to perform the method. A technical benefit may include automating a leak detection process.

In some examples, a non-transitory computer-readable storage medium may include instructions, which when executed by a processor device, cause the processor device to perform the method. A technical benefit may include automating a leak detection process.

In some examples, a computer program product may include program code for performing, when executed by a processor device, the method. A technical benefit may include automating a leak detection process.

In some examples, the method may further include receiving, by the processor device of a computer system, vehicle identifier data indicative of a second vehicle. The method may further include obtaining, by the processor device, a vehicle configuration of the vehicle based on the vehicle identifier data, the vehicle configuration including at least one second potential leak location. The method may further include moving, by the processor device, the first sensor device to the at least one second potential leak location with respect to the vehicle. The method may further include receiving, by the processor device, a second measurement from the first sensor device. A technical benefit may include automating a leak detection process for multiple vehicles.

In some examples, the vehicle may include a commercial truck. A technical benefit may include automating a leak detection process for a commercial truck.

In some examples, the method may further include sending, by the processor device, a second command to automatically position the first sensor device at a second potential leak location with respect to the vehicle. The method may further include receiving, by the processor device, a second measurement from the first sensor device. A technical benefit may include automating a leak detection process for multiple locations on a vehicle.

In some examples, the second sensor device may include a pressure sensor device. A technical benefit may include more accurately determining relative locations of vehicle components.

In some examples, receiving the vehicle identifier data may further include receiving an image from a camera, the image including a vehicle identifier comprising a text string. Obtaining the vehicle configuration may further include identifying the text string based on the image, and retrieving the vehicle configuration from a vehicle configuration database of predetermined vehicle configurations based on the identified text string. A technical benefit may include identifying a vehicle using pre-existing vehicle markings.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benepfits.

### BRIEF DESCRIPTION OF THE DRAWINGS

With reference to the appended drawings, below follows a more detailed description of aspects of the disclosure cited as examples.
**FIGS. 1A and 1B** are exemplary views of inspections of different types of vehicles using a movable robot arm, according to one example.
**FIG. 2** is an exemplary view of the robot arm of FIGS. 1A and 1B, according to one example.
**FIG. 3** is an exemplary view of an inspection bay for a vehicle including a movable robot arm, according to one example.
**FIGS. 4A** **and** **4B** are views of an identification and inspection process for the vehicle of FIG. 1A in an inspection bay having a movable robot arm, according to one example.
**FIG. 5** is a view of an identification and inspection process for the vehicle of FIG. 1B in the inspection bay of FIGS. 4A and 4B, according to one example.
**FIG. 6** is a flow chart of an exemplary method to identify and inspect a vehicle, according to one example.
**FIG. 7** is an exemplary block diagram of a computer system and vehicle identification database for performing identification and inspection of a vehicle, according to one example.
**FIG. 8** is a schematic diagram of an exemplary computer system having additional components for implementing examples disclosed herein, according to one example.

### DETAILED DESCRIPTION

Aspects set forth below represent the necessary information to enable those skilled in the art to practice the disclosure.

The disclosure relates generally to vehicle maintenance operations. In particular aspects, the disclosure relates to automated identification of vehicle variants for maintenance operations. In some examples, a vehicle configuration for a vehicle, including potential leak locations for the vehicle, are obtained from vehicle identifier data. A sensor device is moved to the potential leak locations and measurements from the sensor device are received. By identifying different vehicle configurations, moving the sensor device to the potential leak locations can be automated for different vehicles and vehicle configurations using robotic inspection system.

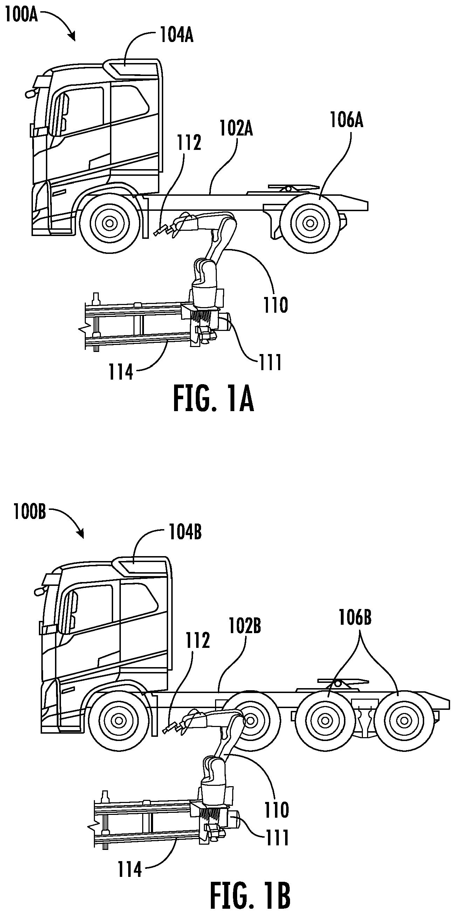

In this regard, FIGS. 1A and 1B are exemplary views of inspections of different types of vehicles 100A, 100B using a movable robot arm 110, according to one example. In the example of FIG. 1A, a truck 100A has a chassis 102A, a cab 104A coupled to the chassis 102A, and a plurality of wheels 106A in a first configuration (e.g., two axles, with two wheels on the front axle and two or four wheels on the rear axle). As used herein, each configuration may include defined aspects of the vehicle, such as vehicle length, vehicle width, number of axles, wheelbase, front and rear overhang, etc.

As will be discussed in greater detail below, a robot arm 110 may move along a rail system 114 and positions a sensor device 112 at predetermined locations on the vehicle 100A to take measurements of various systems and/or components. For example, the robot 110 may position the sensor device 112 at one or more potential leak locations, such as components of a pneumatic and/or hydraulic system of the vehicle 100A that are known to be likely failure points, to diagnose fluid leaks. However, other movement systems for the robot arm 110, or a similar robot, may be used.

As shown by FIG. 1B, another truck 100B has a chassis 102B, a cab 104B coupled to the chassis 102B, and a different plurality of wheels 106B in a second configuration (e.g., four axles, with two wheels on the front axle and two or four wheels on each rear axle). The robot arm 110 moves along the rail system 114 and positions the sensor device 112 at different predetermined locations on the vehicle 110B to take measurements. For example, the configuration of the vehicle 100B may have different potential leak locations, such that the robot arm 110 is positioned and operated differently when inspecting the vehicle 110B of FIG. 1B.

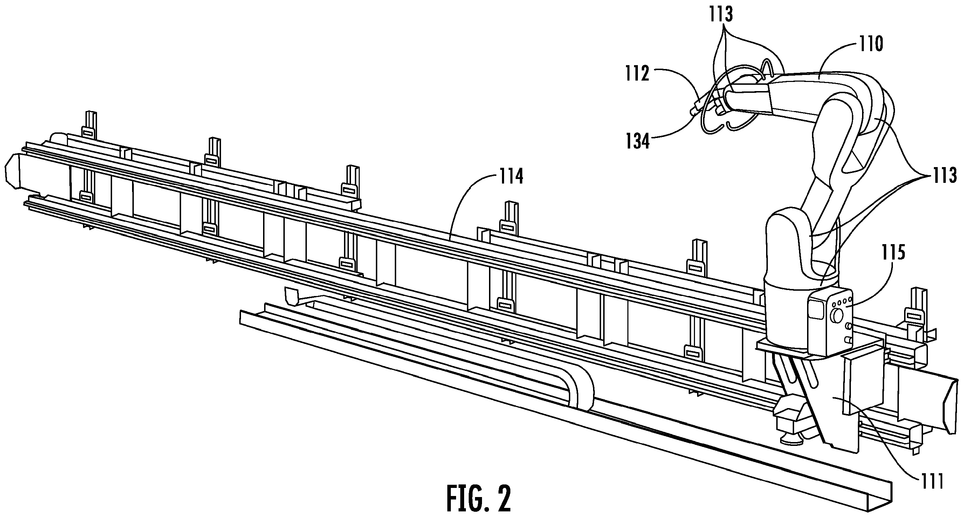

FIG. 2 is an exemplary view of the robot arm 110 of FIGS. 1A and 1B, according to one example. The exemplary robot arm 110 is movably attached to the rail system 114 via a movable base 111. In this example, the first sensor device 112 is an ultrasonic sensor device 134 that is capable of detecting an air leak when the ultrasonic sensor device 134 is positioned in proximity to the air leak. Alternatively, or in addition, the first sensor device 112 may include a video camera, thermal camera, and/or other appropriate sensor devices, as desired. The robot arm 110 in this example may be manipulable about a number of axes 113 (six axes 113 in this example) to position the first sensor device 112 with up to six degrees of freedom so that the first sensor device 112 may be positioned in an optimal position and orientation to detect a leak at each potential leak location. The robot arm 110 may include a robot controller 115 for controlling the robot arm 110 and/or for communicating with an external computing system. It should be understood, however, that any number of different arrangements may be used to implement aspects of the disclosure, as desired.

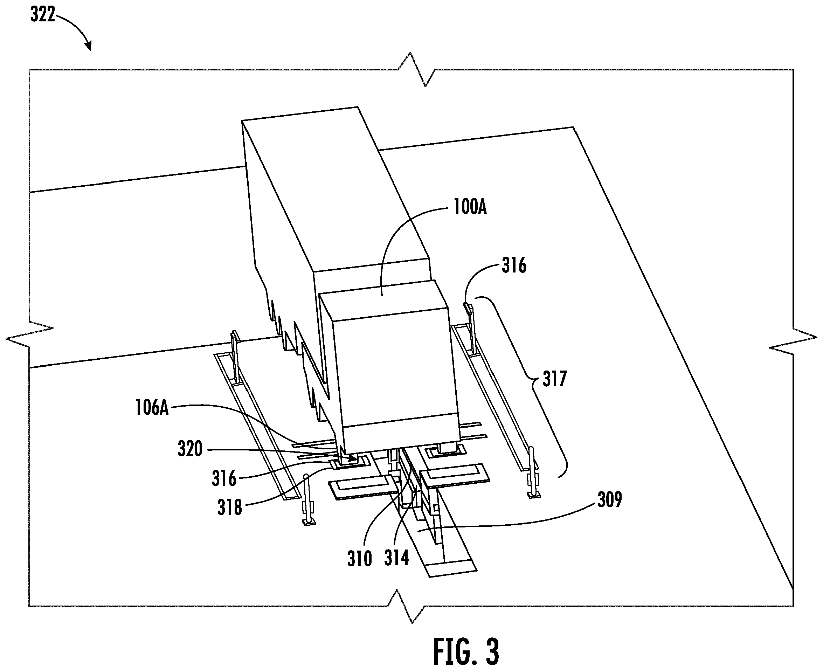

FIG. 3 is an exemplary view of an inspection bay 322 for a vehicle 100A, the vehicle 100B of FIG. 1B, and/or other vehicles. The inspection bay 322 includes a sunken work area 309 that includes a rail system 314 and movable robot arm 310 similar to the robot arm 110 of FIGS. 1A-2. The inspection bay 322 in this example includes one or more sensor devices 316 to determine a relative location of the vehicle 100A and components thereof in relation to a predetermined ground location 318. In this example, the sensor device(s) 316 may be part of a wheel tracking system 317 that may be used to determine a relative location of the wheels 106A with respect to the predetermined ground location 318. In some examples, the wheel tracking system 317 may use one or more laser sensors or other sensors to obtain a precise location for the wheels 106A, which in turn allows for determining the precise locations for each of the potential leak locations. In addition, or as an alternative, the sensor device(s) 316 may include a pressure sensor device 320 that detects the presence of the wheels 106A of the vehicle 100A at the predetermined ground location 318.

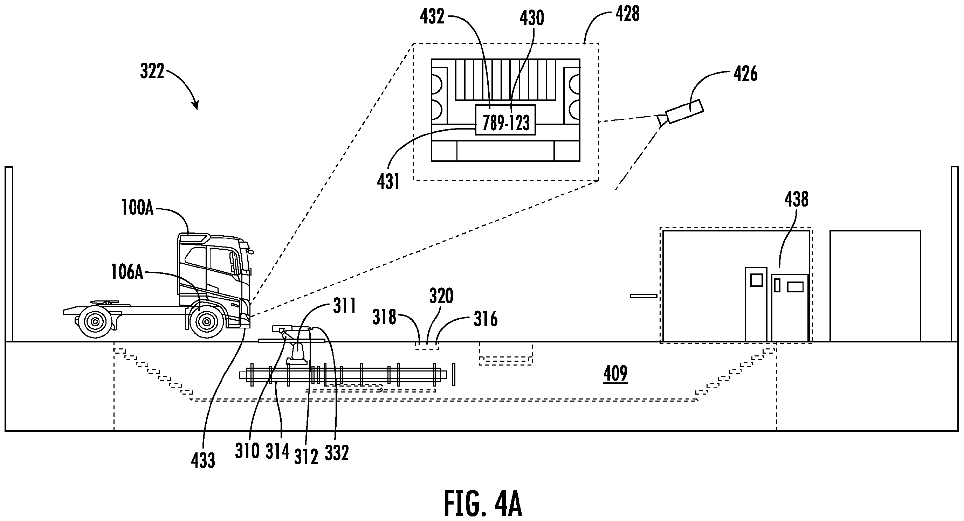

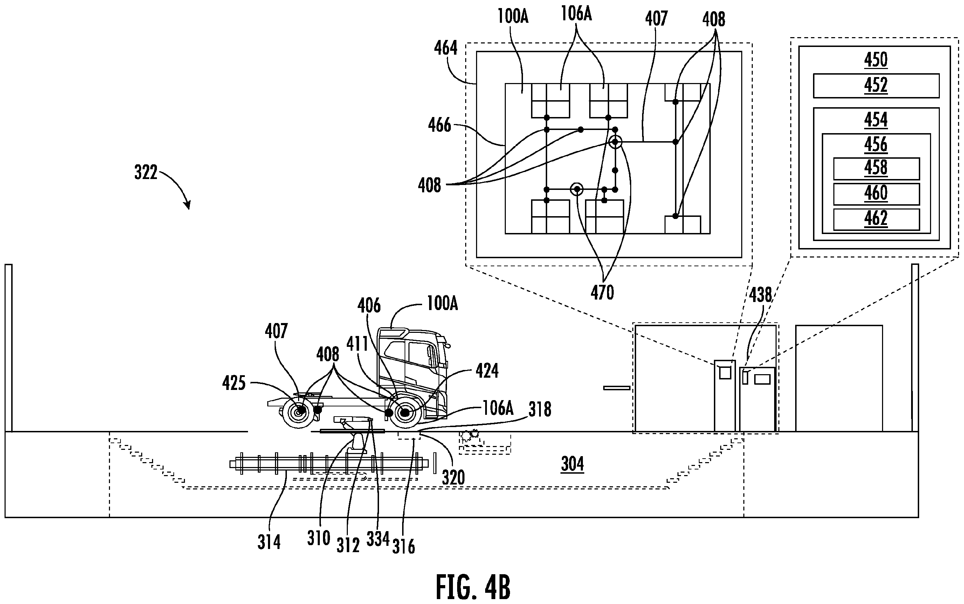

Using the known locations of the robot arm 310, the predetermined ground location 318, and the wheels 106A in relation to each other, the relative locations of components and/or systems of the vehicle 100A can be determined. In this regard, FIGS. FIGS. 4A and 4B are views of an identification and inspection process for the vehicle 100A in the inspection bay 322, according to one example. As shown by FIG. 4A, the inspection bay 322 further includes a computer system 438 and one or more cameras 426 to identify the vehicle 100A and the configuration 458 thereof. In this example, as the vehicle 100A moves forward into the inspection bay 322, the camera 426 captures an image 428 of a portion of the vehicle 100A that includes a vehicle identifier 430 for the vehicle 100A. In this example, the vehicle identifier 430 is a text string 432 of an identification tag 431, such as a license plate for example. In some embodiments, the camera 426 may also replace or be combined with the sensor(s) 316 for determining the relative location of the wheels 106A with respect to the predetermined ground location 318. For example, the image 428 captured by the camera 426 may also be used to determine the relative location of the wheels 106A, thereby reducing the total number of components employed for the inspection process. In some examples, the vehicle identifier can also or alternatively include Radio-Frequency Identification RFID data received from an RFID tag 433 on the vehicle 100A, wherein identifying the vehicle configuration 458 is based at least in part on the RFID data.

As shown by FIG. 4B, the computer system 438 next receives vehicle identifier data 452 indicative of the vehicle identifier 430 of the vehicle 100A. In this example, receiving the vehicle identifier data 452 includes receiving the captured image 428 from the camera 426. The vehicle identifier data 452 may be stored in a vehicle identification database 450 of predetermined vehicle configurations that is accessible by the computer system 438. The vehicle identification database stored on the computer system 438 and/or another local or remote computer system, e.g., on a server, as desired.

The vehicle identification database 450 may receive and store vehicle identifier data 452 for identifying different types of vehicles and/or different individual vehicles having known configurations. The vehicle identification database 450 may also include a vehicle configuration database 454 having a plurality of vehicle configurations 456. Each vehicle configuration 456 may include information specific to the vehicle configuration 456, such as potential leak locations 458 and wheel locations 460 for example.

The computer system 438 obtains a vehicle configuration of the vehicle 100A based on the vehicle identifier data, e.g., by identifying the text string 432 based on the vehicle identifier data 452, and retrieves the vehicle configuration 456 for the vehicle 100A from the vehicle identification database 450 . Identification of the text string 432 or other vehicle identifier 454 may be performed by the computer system 438 or other system using a machine-learning model or other process for extracting alphanumeric values from captured image 428. Based on vehicle identifier 454 extracted from the vehicle identifier data 452, a vehicle configuration 456 is retrieved for the vehicle 100A, including potential leak location data 458, wheel locations 460, and/or other information, as desired.

Locations of the potential leak locations 408 may be determined using the potential leak location data 458 relative to a sensor, e.g., sensor 312, so that the sensor can be moved to the potential leak locations 458 to obtain appropriate measurements. To determine the relative locations of the potential leak locations 408 with respect to the robot arm 310, a measurement from the sensor device 316, i.e., the pressure sensor device 320, is received by the computer system 438, with the measurement indicative of a location of the vehicle 100A relative to the predetermined ground location 318.

The computer system 438 may determine the location of the vehicle 100A relative to the predetermined ground location 318 based on the measurement from the second sensor device 316, and may determine potential leak locations 408 with respect to the predetermined ground location 318 based on the determined vehicle configuration and the location of the vehicle 100A relative to the predetermined ground location 318.

For example, based on the known locations of the wheels 106A of the vehicle 100A, e.g., at the predetermined ground location 318 based on a measurement from the second sensor device 316, the relative locations of the potential leak locations 408 can be determined using the potential leak location data 458 and the wheel location data 460 of the vehicle configuration 456, in relation to each other and in relation to the location of the robot arm 310. For example, the computer system 438 may determine a number of specifications from the determined locations of the wheels 106A and/or other components, such as a number of wheels 106A, a number of axles, a wheelbase of the vehicle 100A, front and rear overhang, etc., and may match the determined specifications to the appropriate vehicle configuration 456 in the vehicle configuration database 454. In this example, the computer system 438 may include a user interface 464 for displaying information to and interacting with an operator. For example, the user interface 464 may display a graphical representation 466 of the vehicle 106 within the inspection bay 322 including relevant systems, e.g., pneumatic system 407, and the potential leak locations 408 for the vehicle 100A, as well as other components, e.g., wheels 106A, and relative positions of the robot arm 310 with respect to the vehicle 100A and potential leak locations 408. In some examples, the operator may manually select the vehicle configuration 456, e.g., from a list of potential vehicle configurations 456 having similar specifications.

The computer system 438 can then access a robot program 462 corresponding to the determined vehicle configuration 456 containing instructions to move the robot arm 310 to position the first sensor device 312 at a first leak location 424 of the potential leak locations 408, and take appropriate measurements, e.g., ultrasonic sensor measurements indicative of an air leak in a pneumatic system 407 and/or a fluid leak in a hydraulic system 411, for example. The robot programs 462 for the different vehicle configurations 456 may be stored and accessed from the vehicle identification database 450, and/or separately stored and accessed from another location, such as the robot controller (e.g., robot controller 115 of FIG. 2), as desired. The robot arm 310 is then moved to position the first sensor device 312 at a second leak location 425 of the potential leak locations 408, and take appropriate measurements, and so on.

Identifying the vehicle configuration 456 from a vehicle configuration database 454 may be beneficial over conventional identification methods, such as manual identification, for a number of reasons. For example, accurately identifying a vehicle configuration 456 allows the correct robot program 462 for the vehicle 100A, that accounts for variations in placement of components in different vehicle configurations 456, to be reliably and automatically selected. The robot program 462 may direct the robot arm 310 to move and orient the first sensor device 312 to take measurements at one or more specific targets, e.g., the potential leak locations 408. By directing the robot arm 310 to specific potential leak locations 408 with specific positions and orientations for the first sensor device 312, the presence and locations of actual leaks may be more accurately detected and measured, as opposed to a broader scan of the vehicle 100A using a sensor covering a wider area, which may fail to detect or accurately measure potential leaks.

The measurements are received by the computer system 438, and can be used for subsequent operations, such as logging detected air leaks for further inspection, alerting a technician to the presence of an air leak, and/or any other appropriate operation, as desired. In this example, the user interface 464 highlights actual leak locations 470 in the graphical representation 466 of the vehicle 100A, highlighting potential leak locations 408 where the measurements from the first sensor device 312 are indicative of a leak. The user interface 464 may display additional information, as desired, such as videos or images captured during the inspection, a table or list of measurements for the potential leak locations 408, and/or may permit the operator to input comments or additional information, e.g., a repair suggestion, to aid in post-inspection maintenance and/or repair. The measurements can also be stored on the computer system 438 or elsewhere, which may allow measurements of numerous vehicles over time to be accurately collected and cataloged for use in data-driven decision-making for subsequent inspections, e.g., determining when maintenance and/or repair is required, rather than subjective decision-making during inspection.

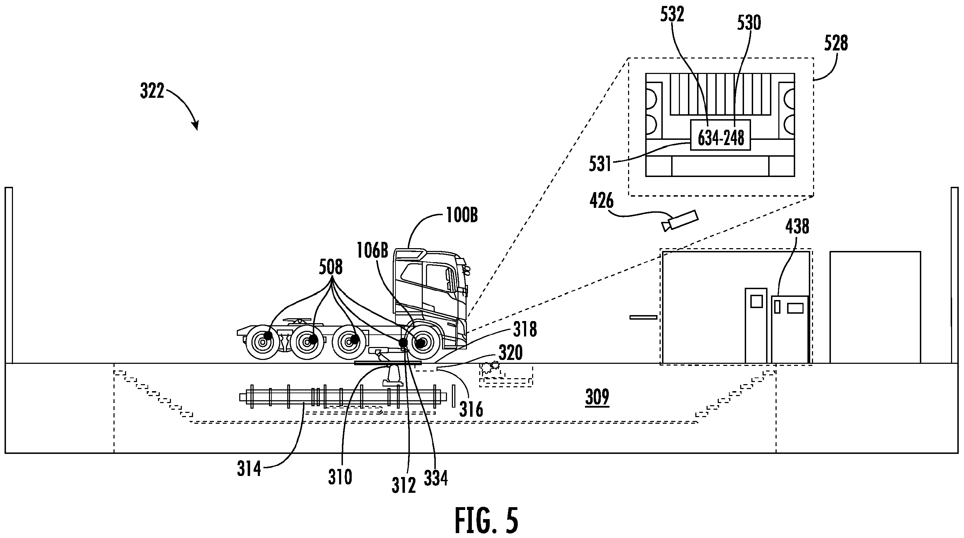

FIG. 5 is a view of an identification and inspection process for the vehicle 100B of FIG. 1B in the inspection bay 322 of FIGS. 4A and 4B, according to one example. In this example, the camera 426 captures an image 528 of a portion of the vehicle 100B that includes a different vehicle identifier 530 for the vehicle 100B, e.g., a text string 532 of an identification tag 531. The computer system 438 receives the image 528 and obtains vehicle identifier data that includes a vehicle configuration for the vehicle 100B with locations of a plurality of different potential leak locations 508 for the vehicle 100B. The computer system 438 may determine relative locations of the potential leak locations 508 based on determining a location of the wheels 106B of the vehicle 100B with respect to the predetermined ground location 318. The computer system 438 may move the robot arm 310 to each potential leak location 508 and take appropriate measurements using similar features and operations described above with respect to FIGS. 4A and 4B.

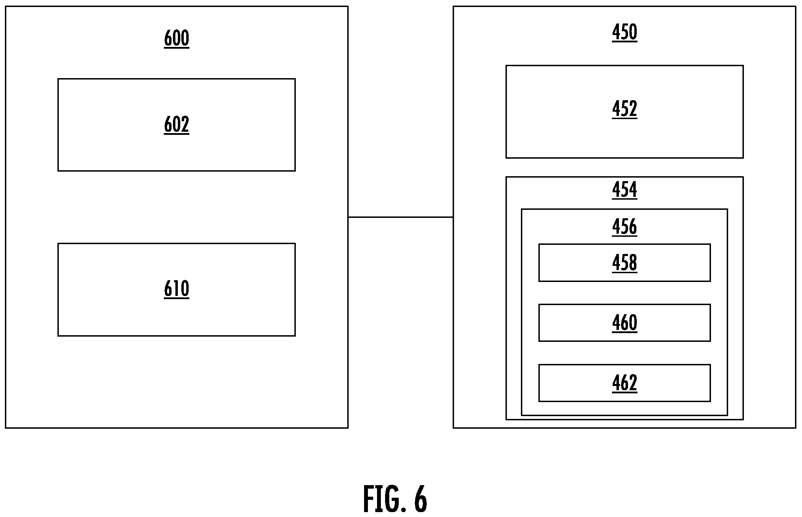

FIG. 6 is an exemplary block diagram of an exemplary computer system 600 in communication with the vehicle identification database 450 (which may be locally or remotely stored in this example) for performing identification and inspection of a vehicle, according to one example. In some examples, the computer system 600, vehicle identification database, and/or features therein may be incorporated into the computer system 348 of FIGS. 3-5, and/or may be in communication therewith. The computer system 600 may include a processor circuit 602 and a memory 610 in communication with the vehicle identification database 450. As discussed above with respect to FIG. 4B, the vehicle identification database 450 may include vehicle identifier data 452 for identifying different types of vehicles and/or different individual vehicles having known configurations. The vehicle identification database 450 may also include a vehicle configuration database 454 having a plurality of vehicle configurations 456. Each vehicle configuration 456 may include information specific to the vehicle configuration 456, such as potential leak location data 458 and wheel location data 460 for example.

The computer system 600 may access the vehicle identification database 450 to obtain vehicle identifier data 452 to identify a particular vehicle, e.g., vehicle 100A. Based on the vehicle identifier data 452, a vehicle configuration 456 including potential leak location data 458 and wheel location data 460 is retrieved. Using the vehicle configuration 456, locations of the potential leak locations, e.g., leak locations 408, relative to a sensor, e.g., sensor 312, are determined, and a robot program 462 associated with the vehicle configuration 456 may be used to direct a robot to move the sensor to the potential leak locations 408 and obtain appropriate measurements.

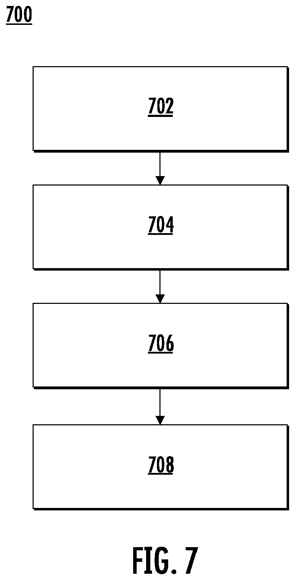

FIG. 7 is a flow chart of an exemplary method 700 to identify and inspect a vehicle, according to one example. The method 700 may include receiving, by a processor device (such as the processor device 602 of FIG. 6) of a computer system (such as computer system 438 of FIG. 4B and/or computer system 600), vehicle identifier data (such as vehicle identifier data 652) indicative of a vehicle 100A, 100B (Block 702).

The method 700 may further include obtaining, by the processor device 602, a vehicle configuration (such as vehicle configuration 654) of the vehicle 100A based on the vehicle identifier data 652, the vehicle configuration 654 including at least one potential leak location (such as potential leak location data 458 indicative of locations 408, 508 (Block 702).

The method 700 may further include moving, by the processor device 602, a first sensor device 312 to the at least one potential leak location 408, 508 with respect to the vehicle 100A, 100B (Block 706).

The method 700 may further include receiving, by the processor device 602, a measurement from the first sensor device 312 (Block 708).

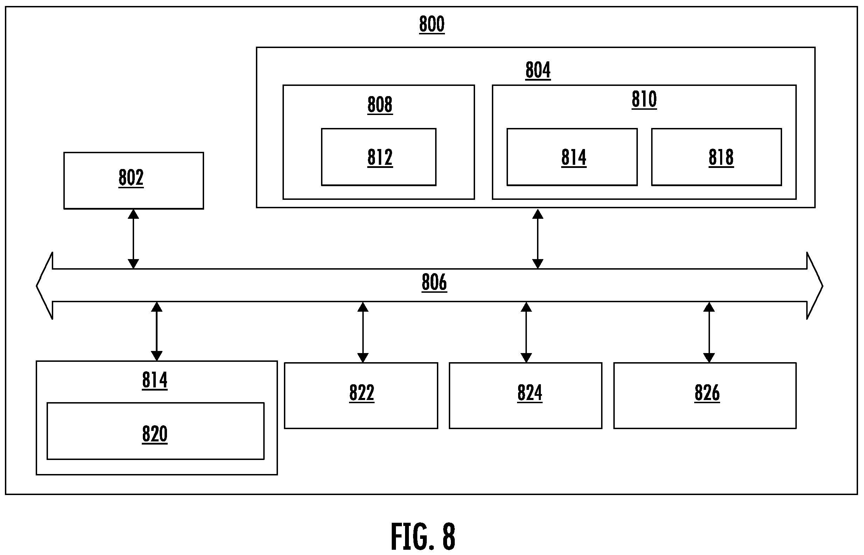

FIG. 8 is a schematic diagram of a computer system 800 having additional components for implementing examples disclosed herein. The computer systems 438, 700, and 800, and/or components thereof may be used interchangeably in some examples, as desired. The computer system 800 is adapted to execute instructions from a computer-readable medium to perform these and/or any of the functions or processing described herein. The computer system 800 may be connected (e.g., networked) to other machines in a LAN, an intranet, an extranet, or the Internet. While only a single device is illustrated, the computer system 800 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 800 may comprise at least one computing device or electronic device capable of including firmware, hardware, and/or executing software instructions to implement the functionality described herein. The computer system 800 may include a processor device 802 (may also be referred to as a control unit), a memory 804, and a system bus 806. The computer system 800 may include at least one computing device having the processor device 802. The system bus 806 provides an interface for system components including, but not limited to, the memory 804 and the processor device 802. The processor device 802 may include any number of hardware components for conducting data or signal processing or for executing computer code stored in memory 804. The processor device 802 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processor device 802 (e.g., via a circuit or any other wired, wireless, or network connection) and may include computer code for executing one or more processes described herein. The memory 804 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures and which can be accessed by a computer or other machine with a processor device 802. A basic input/output system (BIOS) 812 may be stored in the non-volatile memory 808 and can include the basic routines that help to transfer information between elements within the computer system 800.

The computer system 800 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program product 820 stored on a transitory or non-transitory computer-usable or computer-readable storage medium (e.g., single medium or multiple media), such as the storage device 814, which includes complex programming instructions (e.g., complex computer-readable program code) to cause the processor device 802 to carry out the steps described herein. Thus, the computer-readable program code can comprise software instructions for implementing the functionality of the examples described herein when executed by the processor device 802. The processor device 802 may serve as a controller or control system for the computer system 800 that is to implement the functionality described herein.

The computer system 800 also may include an input device interface 822 (e.g., input device interface and/or output device interface). The input device interface 822 may be configured to receive input and selections to be communicated to the computer system 800 when executing instructions, such as from a keyboard, mouse, touch-sensitive surface, etc. Such input devices may be connected to the processor device 802 through the input device interface 822 coupled to the system bus 806 but can be connected through other interfaces such as a parallel port, an Institute of Electrical and Electronic Engineers (IEEE) 1394 serial port, a Universal Serial Bus (USB) port, an IR interface, and the like. The computer system 800 may include an output device interface 824 configured to forward output, such as to a display, a video display unit (e.g., a liquid crystal display (LCD) or a cathode ray tube (CRT)). The computer system 800 may also include a communications interface 826 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

Some non-limiting examples may include:
Example 1: A computer-implemented method 700 comprising: receiving, by a processor device 602 of a computer system 600, vehicle identifier data 452 indicative of a vehicle 100A; obtaining, by the processor device 602, a vehicle configuration 456 of the vehicle 100A based on the vehicle identifier data 452, the vehicle configuration 456 including at least one potential leak location 458; moving, by the processor device 602, a first sensor device 312 to the at least one potential leak location 408 with respect to the vehicle 100A; and receiving, by the processor device 602, a measurement from the first sensor device 312.
Example 2: The method 700 of example 1, wherein receiving the vehicle identifier data 452 further comprises: receiving an image 428 from a camera 426, the image 428 including a vehicle identifier 430 comprising a text string 432, wherein obtaining the vehicle configuration 430 further comprises: identifying the text string 432 based on the image 428, and retrieving the vehicle configuration 456 from a vehicle configuration database 454 of predetermined vehicle configurations 456 based on the identified text string 432, wherein the first sensor device 312 comprises an ultrasonic sensor device 434, and wherein the measurement from the first sensor device 312 comprises an ultrasonic sensor measurement indicative of an air leak, the method 700 further comprising: receiving, by the processor device 602, a measurement from a second sensor device 316 indicative of a location of the vehicle 100A relative to a predetermined ground location 318, wherein moving the first sensor device 312 at the at least one potential leak location 408 with respect to the vehicle 100A is based in part on measurement from the second sensor device 316, wherein the second sensor device 316 comprises a pressure sensor device 320.
Example 3: The method 700 of any preceding example, wherein receiving the vehicle identifier data 452 further comprises receiving an image 428 from a camera 426, the image 428 including the vehicle identifier 430.
Example 4: The method 700 of any preceding example, wherein the at least one potential leak location 458 is at least one location in a pneumatic system 407 of the vehicle 100A.
Example 5: The method 700 of any preceding example, wherein the at least one potential leak location 458 is at least one location in a hydraulic system 411 of the vehicle 100A.
Example 6: The method 700 of any preceding example, wherein the at least one potential leak location 458 comprises a plurality of potential leak locations 458 with respect to the vehicle 100A.
Example 7: The method 700 of any preceding example, further comprising: receiving, by the processor device 602, a measurement from a second sensor device 316 indicative of a location of the vehicle 100A relative to a predetermined ground location 318, wherein the command to automatically position the first sensor device 312 at the at least one potential leak location 408 with respect to the vehicle 100A is based in part on the measurement from the second sensor device 316.
Example 8: The method 700 of example 7, further comprising: determining, by the processor device 602, the location of the vehicle 100A relative to the predetermined ground location 318 based on the measurement from the second sensor device 316; and determining, by the processor device, the at least one potential leak location 408 with respect to the predetermined ground location 318 based on the vehicle configuration 456 and the location of the vehicle 100A relative to the predetermined ground location 318, wherein moving the first sensor device 312 to the at least one potential leak location 408 with respect to the vehicle 100A is based on the at least one potential leak location 408 with respect to the predetermined ground location 318.
Example 9: The method 700 of any preceding example, wherein the vehicle identifier data 452 comprises Radio-Frequency Identification RFID data received from an RFID tag 433 on the vehicle 100A, and wherein identifying the vehicle configuration 456 is based on the RFID data.
Example 10: The method 700 of any preceding example, wherein the first sensor device 312 comprises an ultrasonic sensor device 434.
Example 11: The method 700 of any preceding example, wherein moving the first sensor device 312 to the at least one potential leak location 408 with respect to the vehicle 100A comprises operating a robot arm 310 comprising the first sensor device 312 to move the first sensor device 312 to the at least one potential leak location 408.
Example 12: The method 700 of example 11, wherein the command to operate the robot arm 310 to position the first sensor device 312 at the at least one potential leak location 408 is further based on: a relative location of a wheel 106A of the vehicle 100A relative to a base portion 311 of the robot arm 310; and a relative location of the at least one potential leak location 408 with respect to the relative location of the wheel 106A of the vehicle 100A.
Example 13: A computer system 800 configured to perform the method 700 according to any preceding example.
Example 14. A non-transitory computer-readable storage medium 814 comprising instructions, which when executed by a processor device 802, cause the processor device 802 to perform the method 700 of any of examples 1-12.
Example 15: A computer program product 820 comprising program code for performing, when executed by a processor device 802, the method 700 of any of examples 1-12.
Example 16: The method of any of examples 1-12, further comprising: receiving, by the processor device 602 of a computer system 600, vehicle identifier data 452 indicative of a second vehicle 100B; obtaining, by the processor device 602, a vehicle configuration 456 of the vehicle 100B based on the vehicle identifier data 452, the vehicle configuration 456 including at least one second potential leak location 508; moving, by the processor device 602, the first sensor device 312 to the at least one second potential leak location 508 with respect to the vehicle 100B; and receiving, by the processor device 602, a second measurement from the first sensor device 312.
Example 17: The method 700 of an of examples 1-12, wherein the vehicle comprises a commercial truck.
Example 18: The method 700 of any of examples 1-12, further comprising: sending, by the processor device 602, a second command to automatically position the first sensor device 312 at a second potential leak location 425 with respect to the vehicle 100A; and receiving, by the processor device 602, a second measurement from the first sensor device 312.
Example 19: The method 700 of example 7 or 8, wherein the second sensor device 316 comprises a pressure sensor device 320.
Example 20: The method 700 of any of examples 1-12, wherein receiving the vehicle identifier data 452 further comprises: receiving an image 428 from a camera 426, the image 428 including a vehicle identifier 430 comprising a text string 432, and wherein obtaining the vehicle configuration 456 further comprises: identifying the text string 432 based on the image 428, and retrieving the vehicle configuration 456 from a vehicle configuration database 454 of predetermined vehicle configurations 456 based on the identified text string 432.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer-implemented method (700) comprising:
receiving, by a processor device (602) of a computer system (600), vehicle identifier data (452) indicative of a vehicle (100A) (702);
obtaining, by the processor device (602), a vehicle configuration (456) of the vehicle (100A) based on the vehicle identifier data (452), the vehicle configuration (456) including at least one potential leak location (458) (704);
moving, by the processor device (602), a first sensor device (312) to the at least one potential leak location (408) with respect to the vehicle (100A) (706); and
receiving, by the processor device (602), a measurement from the first sensor device (312) (708).

2. The method (700) of claim 1,
wherein receiving the vehicle identifier data (452) further comprises:
receiving an image (428) from a camera (426), the image (428) including a vehicle identifier (430) comprising a text string (432),
wherein obtaining the vehicle configuration (430) further comprises:
identifying the text string (432) based on the image (428), and
retrieving the vehicle configuration (456) from a vehicle configuration database (454) of predetermined vehicle configurations (456) based on the identified text string (432),
wherein the first sensor device (312) comprises an ultrasonic sensor device (434), and
wherein the measurement from the first sensor device (312) comprises an ultrasonic sensor measurement indicative of an air leak,
the method (700) further comprising:
receiving, by the processor device (602), a measurement from a second sensor device (316) indicative of a location of the vehicle (100A) relative to a predetermined ground location (318), wherein moving the first sensor device (312) at the at least one potential leak location (408) with respect to the vehicle (100A) is based in part on the measurement from the second sensor device (316),
wherein the second sensor device (316) comprises a pressure sensor device (320).

3. The method (700) of any preceding claim, wherein receiving the vehicle identifier data (452) further comprises receiving an image (428) from a camera (426), the image (428) including the vehicle identifier (430).

4. The method (700) of any preceding claim, wherein the at least one potential leak location (458) is at least one location in a pneumatic system (407) of the vehicle (100A).

5. The method (700) of any preceding claim, wherein the at least one potential leak location (458) is at least one location in a hydraulic system (411) of the vehicle (100A).

6. The method (700) of any preceding claim, wherein the at least one potential leak location (458) comprises a plurality of potential leak locations (458) with respect to the vehicle (100A).

7. The method (700) of any preceding claim, further comprising:
receiving, by the processor device (602), a measurement from a second sensor device (316) indicative of a location of the vehicle (100A) relative to a predetermined ground location (318), wherein the command to automatically position the first sensor device (312) at the at least one potential leak location (408) with respect to the vehicle (100A) is based in part on the measurement from the second sensor device (316).

8. The method (700) of claim 7, further comprising:
determining, by the processor device (602), the location of the vehicle (100A) relative to the predetermined ground location (318) based on the measurement from the second sensor device (316); and
determining, by the processor device, the at least one potential leak location (408) with respect to the predetermined ground location (318) based on the vehicle configuration (456) and the location of the vehicle (100A) relative to the predetermined ground location (318),
wherein moving the first sensor device (312) to the at least one potential leak location (408) with respect to the vehicle (100A) is based on the at least one potential leak location (408) with respect to the predetermined ground location (318).

9. The method (700) of any preceding claim, wherein the vehicle identifier data (452) comprises Radio-Frequency Identification (RFID) data received from an RFID tag (433) on the vehicle (100A), and
wherein identifying the vehicle configuration (456) is based on the RFID data.

10. The method (700) of any preceding claim, wherein the first sensor device (312) comprises an ultrasonic sensor device (334).

11. The method (700) of any preceding claim, wherein moving the first sensor device (312) to the at least one potential leak location (408) with respect to the vehicle (100A) comprises operating a robot arm (310) comprising the first sensor device (312) to move the first sensor device (312) to the at least one potential leak location (408).

12. The method (700) of claim 11, wherein the command to operate the robot arm (310) to position the first sensor device (312) at the at least one potential leak location (408) is further based on:
a relative location of a wheel (106A) of the vehicle (100 A) relative to a base portion (311) of the robot arm (310); and
a relative location of the at least one potential leak location (408) with respect to the relative location of the wheel (106A) of the vehicle (100A).

13. A computer system (800) configured to perform the method (700) according to any preceding claim.

14. A non-transitory computer-readable storage medium (814) comprising instructions, which when executed by a processor device (802), cause the processor device (802) to perform the method (700) of any of claims 1-12.

15. A computer program product (820) comprising program code for performing, when executed by a processor device (802), the method (700) of any of claims 1-12.
